# EUROPEAN PATENT APPLICATION

(11) **EP 4 534 567 A1**
(43) Date of publication of application: **09.04.2025**
(21) Application number: 24201848.9
(22) Date of filing: 23.09.2024
(51) Int. Cl.: C08F 2/06, C08F 218/08

(54) **METHOD OF MANUFACTURING ETHYLENE VINYL ACETATE COPOLYMER**

(30) Priority: 27.09.2023 KR 20230130543
(71) Applicant: Hanwha TotalEnergies Petrochemical Co., Ltd., Seosan-si, Chungcheongnam-do 31900 (KR)
(72) Inventor: KIM, Kwang In, 31900 SEOSAN-SI (KR); HONG, In Hwa, 31900 SEOSAN-SI (KR); SEO, Seok Kyoo, 31900 SEOSAN-SI (KR); KIM, Wan Keun, 31900 SEOSAN-SI (KR)
(74) Representative: Regimbeau

(57) **Abstract**

Disclosed is a method of preparing ethylene vinyl acetate including adding a monomer containing ethylene and vinyl acetate and a solvent containing alkyl acetate to a reactor and performing polymerization.

## Description

### BACKGROUND

### 1. Field

Embodiments of the present disclosure relate to a method of preparing an ethylene vinyl acetate copolymer.

### 2. Description of the Related Art

An ethylene vinyl acetate copolymer is a copolymer in which ethylene and vinyl acetate are randomly copolymerized and exhibits properties comparable to rubber due to excellent flexibility and elasticity thereof. Such an ethylene vinyl acetate copolymer exhibits different physical properties depending on molecular weight or vinyl acetate content and has excellent transparency and adhesion, thus being generally utilized in various applications such as encapsulants for solar cells, shoe soles, coated paper, and agricultural films. In addition, vinyl acetate with a high molecular weight may be utilized in specific applications such as submarine cables, and an ethylene vinyl acetate copolymer with a high vinyl acetate content may be converted into ethylene vinyl alcohol with excellent gas barrier properties through additional saponification. The ethylene vinyl alcohol thus converted may be used in a wide range of fields such as films, containers, and fibers due to excellent gas barrier properties and chemical resistance thereof and is especially used as an essential component in fields that require gas barrier properties, such as fresh food packaging and automobile gasoline tanks.

In general, the industrial preparation of ethylene vinyl acetate copolymers is performed through high-temperature and high-pressure vapor phase polymerization or low-temperature and low-pressure solution polymerization using a vinyl acetate monomer, ethylene, and an initiator as raw materials. Thereamong, the method of preparing an ethylene vinyl acetate copolymer with high vinyl acetate content is generally low-temperature and low-pressure solution polymerization. In this case, C1 to C4 alcohol is used as an additional solvent.

The additional solvent used for the solution polymerization is generally present in an amount of 2 to 20 wt% of the total reaction medium to reduce the viscosity in the polymerization reactor and effectively remove the heat of polymerization generated during ethylene vinyl acetate polymerization. Depending on the type of alcohol used, a chain transfer reaction occurs in which the active point of the polymerization moves to the alcohol, and this chain transfer reaction leads to the termination or branching of polymer growth and acts to hinder the increase in molecular weight of linear polymers.

In order to prevent this phenomenon, an approach using alcohol having a low chain transfer coefficient, such as tert-butanol, alone or a combination thereof, has been suggested, but is inapplicable due to the higher price, the higher boiling point, and reduced separation efficiency during subsequent processes, in particular, unreacted monomer recovery processes due to formation of an azeotropic mixture with a monomer.

The information disclosed in this section is provided only for enhancement of understanding of the background of the present disclosure and therefore it may contain information that does not form the prior art.

### SUMMARY

Embodiments of the present disclosure provide a method of preparing an ethylene vinyl acetate copolymer, as a solvent, using alkyl acetate, which has a low chain transfer constant and is easily separated from monomers in an ethylene vinyl acetate polymerization process.

Embodiments of the present disclosure provide a method of preparing an ethylene vinyl acetate copolymer that easily controls the molecular weight of the ethylene vinyl acetate copolymer and is applicable to ultra-high molecular weight ethylene vinyl acetate copolymer rubber.

A method of preparing ethylene vinyl acetate according to an embodiment of the present disclosure includes adding a monomer containing ethylene and vinyl acetate, and a solvent containing alkyl acetate to a reactor and performing polymerization.

The alkyl acetate may have a boiling point of 57°C to 126°C.

The alkyl acetate may include at least one selected from ethyl acetate, methyl acetate, propyl acetate, butyl acetate, and dimethyl acetate.

The solvent may be added in an amount of 2.5% to 50% by weight based on the total amount of the monomer and the solvent.

The polymerization may further include adding an initiator containing an azobis-based compound, benzoyl peroxide (BPO), or a combination thereof, and the azobis-based compound may include azobisisobutyronitrile (AIBN), azobisdimethylvaleronitrile (ADVN) or a combination thereof.

The ethylene vinyl acetate copolymer may have a weight average molecular weight (Mw) of 150,000 g/mol to 500,000 g/mol.

The ethylene vinyl acetate copolymer may contain 40 mol% to 80 mol% of vinyl acetate.

### DETAILED DESCRIPTION OF EXEMPLARY EMBODIMENTS

Embodiments are provided to more fully illustrate the present disclosure to a person having ordinary skill in the art, the following embodiments may be modified in various other forms, and the scope of the present disclosure is not limited to the following embodiments.

The method of preparing ethylene vinyl acetate according to one embodiment includes polymerizing a monomer in a solvent in a reactor. In this case, the monomer includes ethylene and vinyl acetate, and the solvent includes alkyl acetate.

Conventionally, C1 to C4 alcohol such as methanol was used as a solvent in the polymerization to prepare an ethylene vinyl acetate copolymer. In this case, it is difficult to obtain a high molecular weight resin due to limitations in controlling the molecular weight of the ethylene vinyl acetate (EVA) copolymer and unreacted vinyl acetate often forms an azeotropic mixture with alcohol, thus making separation difficult.

As used herein, the term "azeotropic mixture" has a meaning ordinally known in the art, in other words, refers to a liquid with a specific composition ratio, wherein the composition ratio does not change at a constant temperature like a pure liquid, and composition ratios of the solution and vapor are equal upon boiling. The equilibrium temperature, which is the boiling point of an azeotropic mixture, is referred to as "azeotropic point" and the azeotropic state in which the component ratios of solution and vapor are equal changes depending on pressure, and the azeotropic point has the minimum or maximum value on the boiling point curve showing the relationship between the component ratio and boiling point.

On the other hand, according to one embodiment, when polymerization is performed using an alkyl acetate with a low chain transfer constant as a solvent, an ethylene vinyl acetate (EVA) copolymer with a high molecular weight may be obtained, the physical properties of the product may be improved and thus the ethylene vinyl acetate (EVA) copolymer may be easy to separate because unreacted vinyl acetate and alkyl acetate do not form an azeotropic mixture.

Alkyl acetate used as the solvent may have a boiling point of 57°C to 126°C, for example, 57°C to 102°C or 57°C to 80°C. When an alkyl acetate having a boiling point within the above range is used as a solvent, an ethylene vinyl acetate (EVA) copolymer with a high molecular weight may be obtained.

The alkyl acetate used as the solvent may, for example, include at least one selected from ethyl acetate, methyl acetate, propyl acetate, butyl acetate, and dimethyl acetate. Specifically, the alkyl acetate may be ethyl acetate or methyl acetate.

The solvent may be added in an amount of 2.5% to 50% by weight based on the total amount of the monomer and the solvent, for example, 5% to 30% by weight, 9% to 30% by weight, or 9% to 15% by weight. When the solvent is added within the content range, an ethylene vinyl acetate (EVA) copolymer with a high molecular weight may be obtained during polymerization.

An initiator may be further added during polymerization.

The initiator may include an azobis-based compound, benzoyl peroxide (BPO), or a combination thereof, and the azobis-based compound may include azobisisobutyronitrile (AIBN), azobisdimethylvaleronitrile (ADVN) or a combination thereof.

The ethylene vinyl acetate copolymer obtained by the polymerization may have a weight average molecular weight (Mw) of 150,000 g/mol to 500,000 g/mol, for example, 150,000 g/mol to 400,000 g/mol, 250,000 g/mol to 400,000 g/mol, or 350,000 g/mol to 400,000 g/mol. The ethylene vinyl acetate copolymer with a weight average molecular weight (Mw) within the above range may have improved physical properties and may also be applicable to ultra-high molecular weight ethylene vinyl acetate copolymer rubber.

The ethylene vinyl acetate copolymer obtained through polymerization may contain 40 mol% to 80 mol% of vinyl acetate, for example, 56 mol% to 72 mol% of vinyl acetate. The ethylene vinyl acetate copolymer containing vinyl acetate within the range may have improved physical properties and may also be applicable to ultra-high molecular weight ethylene vinyl acetate copolymer rubber.

Hereinafter, specific examples of the present disclosure will be described. However, the examples described below are only provided to exemplify or illustrate the present disclosure in detail and should not be construed as limiting the scope of the present disclosure. In addition, other details that may be sufficiently conceived by those skilled in the art will be not described.

### (Preparation of ethylene vinyl alcohol copolymer)

### Example 1

21.5% by weight of ethylene, 69.3% by weight of vinyl acetate, and 9.2% by weight of ethyl acetate with a boiling point of 77°C as a solvent were added to a reactor and polymerization was performed at 60°C and an ethylene pressure of 40 kg/cm², to prepare an ethylene vinyl acetate (EVA) copolymer containing in 71.3 mol% of vinyl acetate.

### Example 2

An ethylene vinyl acetate (EVA) copolymer was prepared in the same manner as in Example 1, except that methyl acetate with a boiling point of 57°C was used as the solvent instead of ethyl acetate.

### Comparative Example 1

An ethylene vinyl acetate (EVA) copolymer was prepared in the same manner as in Example 1, except that ethanol was used as the solvent instead of ethyl acetate.

### Comparative Example 2

An ethylene vinyl acetate (EVA) copolymer was prepared in the same manner as in Example 1, except that methanol was used as the solvent instead of ethyl acetate.

### Test 1: Measurement of molecular weight of ethylene vinyl acetate (EVA) copolymer

In order to measure the molecular weights of the ethylene vinyl acetate (EVA) copolymers prepared in Examples 1 and 2 and Comparative Examples 1 and 2, the weight average molecular weight (Mw) was measured using gel permeation chromatography (GPC) equipment, and the results are shown in Table 1 below.

**[Table 1]**

| | Example 1 | Example 2 | Comparative Example 1 | Comparative Example 2 |
|---|---|---|---|---|
| Weight average molecular weight (Mw) | 359, 395 | 394, 573 | 116, 281 | 91, 539 |

As can be seen from Table 1, the molecular weights of the ethylene vinyl acetate (EVA) copolymers prepared according to Examples 1 and 2 are higher than those of Comparative Examples 1 and 2. Therefore, according to one embodiment, it can be seen that the physical properties of the product may be improved by obtaining a high enough molecular weight for application to ethylene vinyl acetate copolymer rubber.

### Test 2: Determination as to whether or not azeotropic mixture of vinyl acetate and solvent is formed

Whether or not the solvents used in Examples 1 and 2 and Comparative Examples 1 and 2 do not form an azeotropic mixture with vinyl acetate and can be separated by simple distillation, or the solvents form an azeotropic mixture and require separation using an extractant, or the like and the results are shown in Table 2 below.

**[Table 2]**

| | Example 1 | Example 2 | Comparative Example 1 | Comparative Example 2 |
|---|---|---|---|---|
| Whether or not azeotropic mixture with vinyl acetate is formed | X | X | ○ | ○ |

This shows that Examples 1 and 2 do not form an azeotropic mixture and can be separated by simple distillation, whereas all of Comparative examples form an azeotropic mixture and require a separate separation process.

As is apparent from the above description, the method according to an embodiment enables preparation of an ethylene vinyl acetate copolymer with a high molecular weight, improves the physical properties of the product, and is applicable to ultra-high molecular weight ethylene vinyl acetate copolymer rubber. In addition, in accordance with the method, the unreacted vinyl acetate and the solvent alkyl acetate do not form an azeotropic mixture, making the subsequent separation process easy.

Although preferred embodiments of the present disclosure have been disclosed for illustrative purposes, those skilled in the art will appreciate that various modifications, additions, and substitutions are possible without departing from the scope and spirit of the disclosure as disclosed in the accompanying claims.

## Claims

1. A method of preparing ethylene vinyl acetate, the method comprising adding a monomer comprising ethylene and vinyl acetate, and a solvent comprising alkyl acetate to a reactor and performing polymerization.

2. The method according to claim 1, wherein the alkyl acetate has a boiling point of 57°C to 126°C.

3. The method according to claim 1, wherein the alkyl acetate comprises at least one selected from ethyl acetate, methyl acetate, propyl acetate, butyl acetate, and dimethyl acetate.

4. The method according to claim 1, wherein the solvent is added in an amount of 2.5% to 50% by weight based on a total amount of the monomer and the solvent.

5. The method according to claim 1, wherein the polymerization further comprises adding an initiator comprising an azobis-based compound, benzoyl peroxide (BPO), or a combination thereof, and
the azobis-based compound comprises azobisisobutyronitrile (AIBN), azobisdimethylvaleronitrile (ADVN) or a combination thereof.

6. The method according to claim 1, wherein the ethylene vinyl acetate copolymer has a weight average molecular weight (Mw) of 150,000 g/mol to 500,000 g/mol.

7. The method according to claim 1, wherein the ethylene vinyl acetate copolymer comprises 40 mol% to 80 mol% of vinyl acetate.
